# DEMANDE DE BREVET EUROPEEN

(11) **EP 0 915 019 A1**
(43) Date de publication de la demande: **12.05.1999**
(21) Numéro de dépôt: 98402744.1
(22) Date de dépôt: 04.11.1998
(51) Int. Cl.: B65B 61/18, B31B 19/90

(54) **Procédé de fabrication de sacs et de conditionnement**

(30) Priorité: 06.11.1997 FR 9713945
(71) Demandeur: FLEXICO-FRANCE, 60119 Henonville (FR)
(72) Inventeur: Bois, Henri Georges, 92200 Neuilly sur Seine (FR)
(74) Mandataire: Texier, Christian

(57) **Abrégé**

Dans le procédé de réalisation de sacs (42) :
- on prévoit un tube (12) ; et
- on coupe le tube pour séparer un sac (42) du reste du tube.

Après l'étape de coupe, on pose sur le sac un profilé de fermeture (70).

## Description

L'invention concerne les procédés de réalisation de sacs et les procédés de conditionnement de substance.

On connaît d'après le document US-4 909 017 un dispositif de réalisation de sacs et de conditionnement dans lequel on forme en continu un tube autour d'un conformateur au moyen d'un film plastique initialement plan. Une goulotte d'alimentation en une substance à conditionner débouche à l'intérieur du conformateur, lequel débouche dans le tube. En aval du conformateur, on effectue une première soudure transversale du tube sur lui-même pour définir une fermeture formant un bord inférieur fermé du sac. Puis on libère la substance qui tombe dans le sac. Ensuite, on effectue une deuxième soudure au-dessus du contenu du sac pour obturer le sac, ainsi qu'une coupe au-dessus de cette deuxième soudure de façon à définir une embouchure fermée pour le sac et à séparer le sac ainsi rempli du reste du tube. En pratique, on réalise en même temps la soudure supérieure d'un premier sac et la soudure inférieure d'un deuxième sac s'étendant en amont du premier sac et on coupe entre les deux soudures. Par ailleurs, un profilé de fermeture a été soudé transversalement sur le film avant que le film soit replié sur lui-même pour former le tube. Ce profilé est ensuite soudé à la paroi opposée du sac et s'étend dans le sac au niveau de l'embouchure fermée. Le profilé pourra être ouvert par l'utilisateur pour accéder à la substance.

Toutefois, ce procédé se révèle difficilement compatible avec certains types spéciaux de profilés de fermeture, par exemple les profilés dits inviolables ou ceux qui font intervenir un collage.

Un but de l'invention est de fournir un procédé d'un type différent pour la réalisation de sacs, voire le conditionnement.

En vue de la réalisation de ce but, on prévoit selon l'invention un procédé de réalisation de sacs dans lequel on prévoit un tube, et on coupe le tube pour séparer un sac du reste du tube et dans lequel, après l'étape de coupe, on pose sur le sac un profilé de fermeture.

Ainsi, l'étape de pose du profilé n'est pas soumise aux contraintes liées à la présence du tube, à la formation de celui-ci et à la coupe du tube. On élargit notamment le champ des possibilités relatives à l'amenée du profilé sur le sac, et relatives au moment au cours duquel la pose est réalisée.

Avantageusement, on effectue la coupe pour former une embouchure ouverte du sac et on pose le profilé sur l'embouchure.

Ainsi, contrairement à l'enseignement du document US-4 909 017 précité, l'embouchure du sac est ouverte après la coupe. Pour certains types de profilés de fermeture, cela facilite l'amenée et la pose du profilé sur le sac.

Avantageusement, préalablement à l'étape de coupe, on assemble deux parois du tube pour former une liaison transversale sur le tube.

Avantageusement, après l'étape de coupe et préalablement à la pose du profilé, on déplace le sac par rapport au tube suivant une direction de déplacement localement non parallèle à une direction longitudinale locale du tube.

Ainsi, les étapes de coupe du sac et de pose du profilé étant spatialement différenciées, on peut disposer d'un volume important pour effectuer chacune d'elles et on simplifie les problèmes d'encombrement sur la chaîne de fabrication. Par ailleurs, on facilite encore dans certains cas l'amenée et la pose du profilé de fermeture.

Avantageusement, préalablement à la pose du profilé, on conforme l'embouchure en une forme prédéterminée.

Ainsi, on facilite la pose du profilé de fermeture.

Avantageusement, préalablement à l'étape de conformation, on écarte deux parois opposées de l'embouchure.

Avantageusement, préalablement à la pose du profilé, on fend des bords latéraux du sac contigus à l'embouchure.

Ainsi, on facilite l'insertion du profilé de fermeture dans l'embouchure, notamment dans le cas développé plus loin d'un profilé commun à deux sacs.

Avantageusement, on pose le profilé en fixant à au moins deux sacs un profilé commun.

Ainsi, on améliore le maintien et le positionnement des sacs les uns par rapport aux autres durant la mise en oeuvre du procédé.

Avantageusement, après la fixation du profilé commun, on coupe le profilé pour séparer les sacs.

Avantageusement, préalablement à la coupe du profilé commun, on fixe des bords latéraux contigus à l'embouchure, l'un à l'autre et au profilé.

On améliore ainsi l'étanchéité du sac aux bords de l'embouchure une fois celle-ci fermée.

On prévoit également selon l'invention un procédé de conditionnement d'une substance mettant en oeuvre le procédé de réalisation de sacs selon l'invention.

Avantageusement, on introduit une substance dans le sac préalablement à la pose du profilé.

Avantageusement, on introduit une substance dans le sac préalablement à l'étape de coupe.

On prévoit également selon l'invention un dispositif pour la réalisation de sacs, comportant des moyens d'amenée d'un tube, et des moyens de coupe du tube pour séparer un sac du reste du tube, le dispositif comportant des moyens de pose d'un profilé de fermeture sur le sac, ces moyens étant disposés pour poser le profilé après que le sac a été séparé du tube.

Avantageusement, le dispositif est agencé de sorte que les moyens de coupe forment une embouchure ouverte sur le sac, et que les moyens de pose posent le profilé sur l'embouchure ouverte.

Avantageusement, le dispositif comporte des moyens pour fixer deux parois du tube de façon à former une fermeture transversale sur le tube, ces moyens s'étendant en amont des moyens de coupe par référence à une direction d'amenée du tube.

Avantageusement, le dispositif comporte au moins une cale pour le sac lors d'une coupe par les moyens de coupe.

Ainsi, on améliore la précision et la rapidité de la coupe.

Avantageusement, le dispositif comporte au moins deux cales adaptées à s'étendre de part et d'autre du sac lors de la coupe par les moyens de coupe.

Avantageusement, le dispositif comporte des moyens de transport pour déplacer le sac par rapport au tube jusqu'aux moyens de pose.

Avantageusement, les moyens de transport sont agencés pour déplacer le sac suivant une direction localement non parallèle à une direction longitudinale locale du tube.

Avantageusement, les moyens de transport comprennent un tapis roulant.

Avantageusement, les moyens de transport comprennent des courroies adaptées à s'étendre de part et d'autre du sac.

Avantageusement, les courroies sont adaptées à s'étendre en contact avec le sac lors de la coupe par les moyens de coupe et à être déplacées pour permettre une arrivée d'un autre sac en regard des moyens de coupe.

Ainsi, on peut évacuer très rapidement le sac après la coupe et amener le sac suivant en position de coupe.

Avantageusement, le dispositif comporte des moyens pour écarter deux parois opposées de l'embouchure.

Avantageusement, le dispositif comporte un conformateur pour l'embouchure ouverte.

Avantageusement, le dispositif comporte des moyens pour fendre des bords latéraux du sac contigus à l'embouchure.

Avantageusement, les moyens pour poser le profilé comprennent des moyens d'amenée d'un profilé sans fin.

Avantageusement, le dispositif comporte des moyens de coupe du profilé s'étendant en aval des moyens de pose du profilé par référence à une direction de déplacement du sac par les moyens de transport.

Avantageusement, le dispositif comporte des moyens pour fixer les bords latéraux du sac contigus à l'embouchure, l'un à l'autre et au profilé.

On prévoit également selon l'invention un dispositif de conditionnement comportant un dispositif de réalisation de sacs selon l'invention.

Avantageusement, le dispositif comporte des moyens pour introduire une substance dans le sac préalablement à la pose par les moyens de pose.

Avantageusement, le dispositif comporte des moyens pour introduire une substance dans le sac préalablement à une coupe par les moyens de coupe.

D'autres caractéristiques et avantages de l'invention apparaîtront encore dans la description suivante d'un mode préféré de réalisation donné à titre d'exemple non limitatif. Aux dessins annexés :
- la figure 1 est une vue partielle en perspective de principe d'un dispositif selon l'invention, illustrant la réalisation du tube et le principe de déplacement des sacs ;
- la figure 2 est une vue en coupe verticale du dispositif de la figure 1 montrant les moyens de coupe et de soudage ;
- les figures 3 et 4 sont des vues en plan des moyens de transport du dispositif de la figure 1 au voisinage des moyens de soudage, respectivement en positions ouverte et fermée des moyens de soudage ;
- les figures 5 et 6 sont des vues partielles respectivement en élévation et en coupe transversale d'un poste d'écartement des bords de l'embouchure, du dispositif de la figure 1 ;
- la figure 7 est une vue partielle en élévation d'un poste de pose de profilé du dispositif de la figure 1 ;
- les figures 8 et 9 sont des vues respectives en élévation et en coupe transversale montrant un poste de soudage du profilé, du dispositif de la figure 1 ; et
- la figure 10 est une vue en élévation d'un poste de soudage des bords du sac et d'un poste de coupe du profilé.

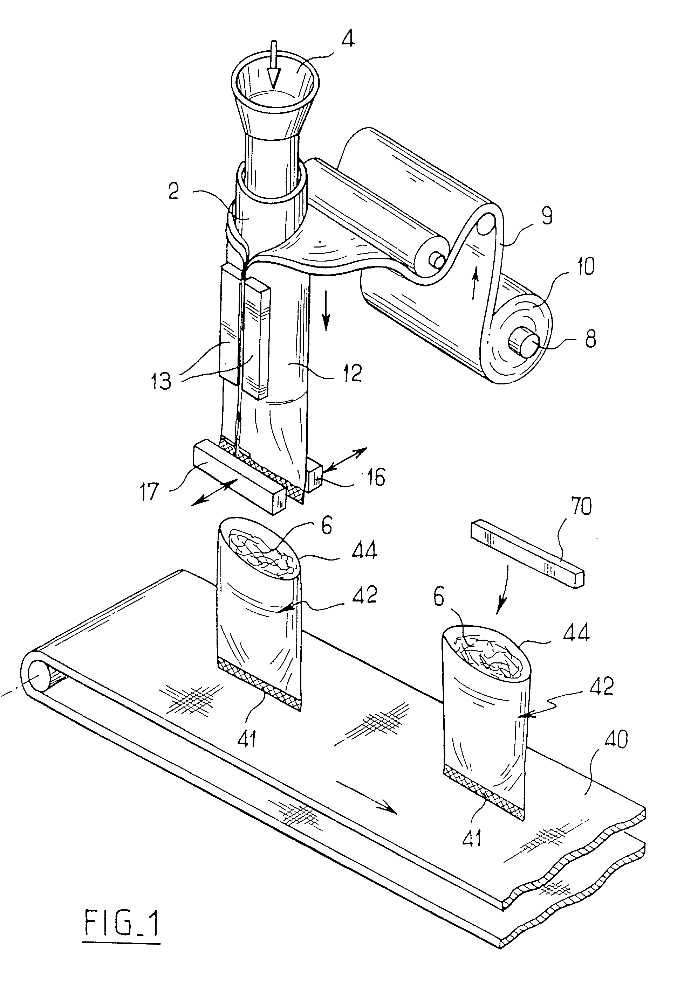

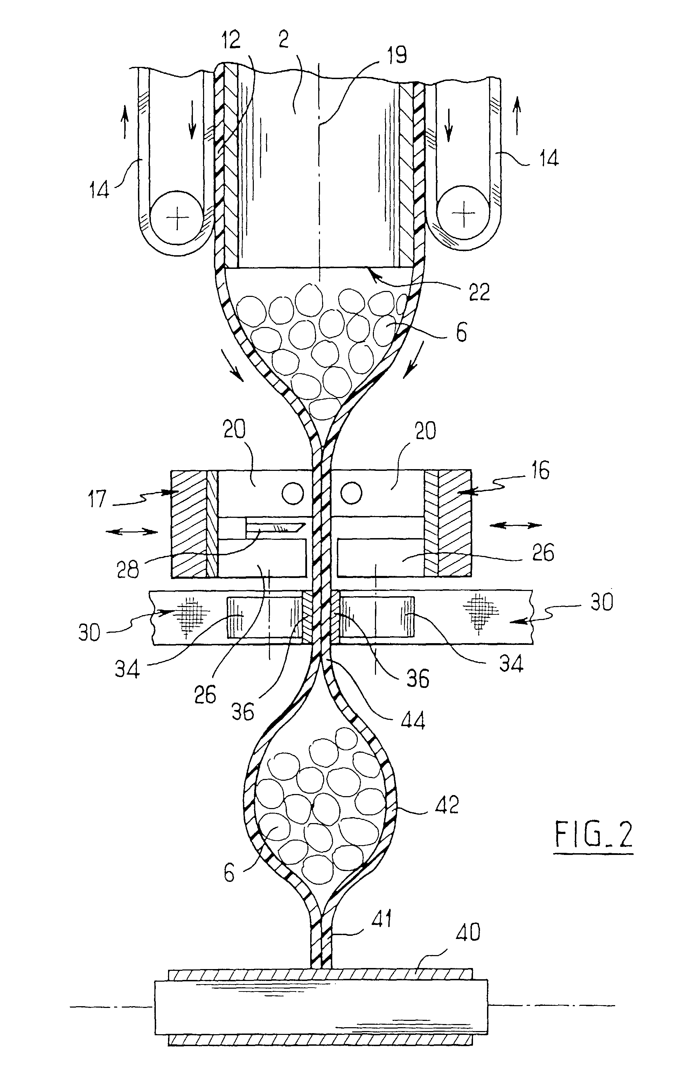

En référence à la figure 1, le dispositif de conditionnement en continu selon l'invention comporte dans le présent mode de réalisation un conformateur comprenant un tube cylindrique 2 s'étendant verticalement et un col. Une goulotte 4 d'alimentation en une substance telle qu'un aliment 6 pénètre dans une extrémité supérieure ouverte du tube 2 pour y introduire la substance. Le dispositif comporte des moyens d'alimentation 8 en un film plan 9 en matière plastique adaptée, à partir d'un rouleau d'approvisionnement 10. Le dispositif est agencé de manière connue pour former continûment le film 9 en un tube 12 lors de son passage sur le conformateur. En l'espèce, le tube 12 est formé suivant la direction verticale de bas en haut. Deux bords longitudinaux opposés du film 9 viennent alors en contact mutuel le long d'une génératrice verticale du tube. Le dispositif comporte un couple de barres de soudage verticales 13 agencées de sorte que les deux bords passent entre celles-ci pour être soudés continûment. On réalise ainsi en continu un tube 12 sans fin. Des moyens d'entraînement du film 9 et du tube 12 sont prévus, tels que des courroies 14 visibles en figure 2. Dans la suite, les directions amont et aval auront pour référence le sens de défilement du tube 12, puis des sacs 42 comme on le verra. Il s'agira donc généralement du sens de défilement de la matière plastique constituant les sacs.

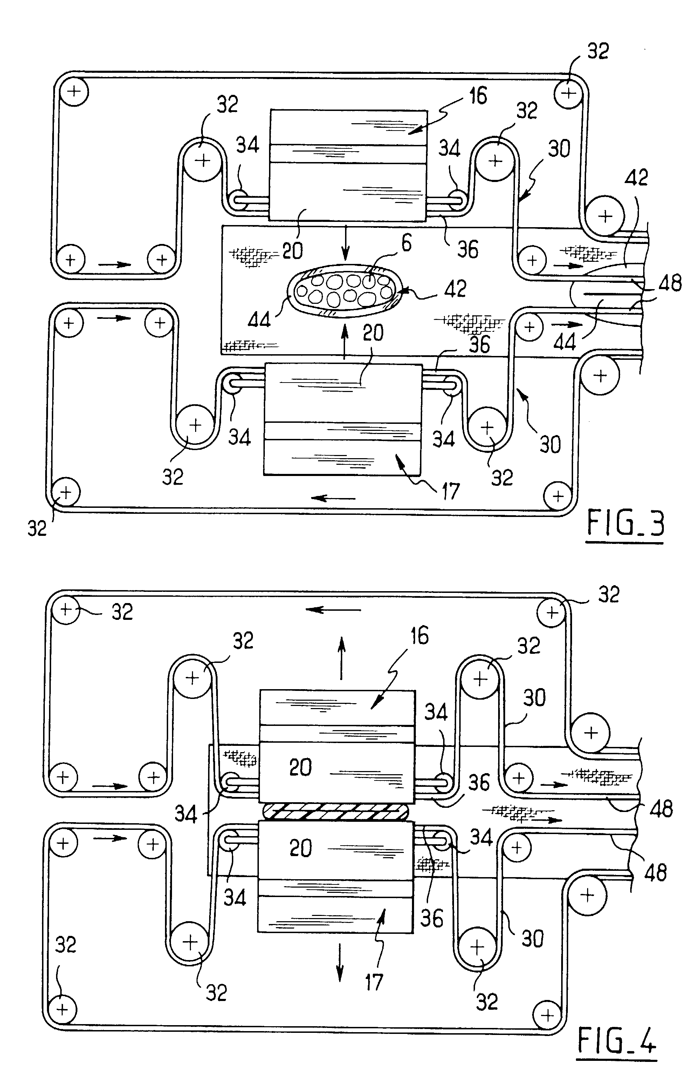

Par référence aux figures 1 à 4, le dispositif comporte deux équipages gauche 16 et droit 17, par référence à une direction d'évacuation des sacs, comme on le verra dans la suite. Les deux équipages 16, 17 sont mobiles dans un plan horizontal suivant une direction radiale à un axe vertical 19 du tube 12. Les deux équipages s'étendent en regard l'un de l'autre en étant diamétralement opposés l'un par rapport à l'autre de part et d'autre de l'axe 19 du tube. Ils sont mobiles de façon à pouvoir être simultanément éloignés de cet axe, comme en figure 3, ou rapprochés de cet axe, comme en figure 4. Les équipages 16, 17 comportent deux barres de soudage respectives 20, s'étendant dans un même plan horizontal, en regard l'une de l'autre et parallèlement l'une à l'autre. Les deux barres 20 s'étendent à distance d'une extrémité inférieure ouverte 22 du tube 2 suivant la direction verticale.

Les équipages 16, 17 comportent en outre deux cales 26 respectives, en forme de barres, fixe chacune par rapport à la barre de soudage 20 associée. Les deux cales 26 sont disposées de la même façon que les barres de soudage 20, au-dessous de celles-ci, parallèlement et à distance de celles-ci.

L'équipage droit 17 comporte en outre un couteau 28 s'étendant entre la barre de soudage 20 et la cale 26 associées, et mobile par rapport à celles-ci suivant une direction radiale à l'axe 19 entre une position rétractée représentée à la figure 2 dans laquelle il est rétracté entre la barre 20 et la cale 26 associées sans faire saillie de celles-ci, et une position étendue dans laquelle il s'étend en saillie de celles-ci en direction de l'axe 19 en interceptant celui-ci et en s'étendant entre la barre 20 et la cale 26 de l'équipage gauche 16.

Le dispositif comporte deux courroies inférieures de maintien et de transport 30. Chaque courroie 30 circule dans un plan général horizontal perpendiculaire à l'axe 19 et est localement parallèle à l'axe 19. Les courroies 30 circulent en étant chacune supportées par des galets fixes 32, ainsi que par deux paires respectives de galets mobiles 34 solidaires respectivement des équipages associés 16, 17. Les galets fixes 32 et les galets mobiles 34 sont disposés de sorte qu'un tronçon 36 de courroie 30 s'étendant entre les galets mobiles 34 associés est situé en permanence sous la cale 26 associée et s'étend parallèlement à celle-ci. Lors du déplacement des équipages 16, 17 tel que précité, les deux tronçons mobiles 36 de courroie effectuent un déplacement relatif identique à celui des équipages en étant, en même temps, éloignés ou rapprochés de l'axe 19. Un dispositif de rattrapage de tension, non représenté, est associé à chaque courroie 30 pour que la tension de la courroie sur les galets ne soit pas altérée par ce déplacement des tronçons mobiles 36 par rapport au reste de la courroie. Le dispositif comporte encore un tapis roulant 40 s'étendant généralement dans un plan horizontal et notamment au-dessous du conformateur et des tronçons mobiles 36 de courroie.

Le dispositif, pour les parties qui viennent d'être décrites, fonctionne de la façon suivante.

En aval de l'extrémité inférieure du conformateur, le tube 12 est pincé par les barres de soudage 20 des deux équipages 16, 17 en position rapprochée pour réaliser un soudage des deux parois du tube 12 l'une à l'autre et ainsi former sur le tube une fermeture transversale 41 perpendiculaire à l'axe 19. En même temps, une fraction de substance 6 à conditionner est libérée dans la goulotte 4 de façon à tomber dans le tube 12 en aval de l'extrémité inférieure 22 et en amont de la soudure 41 ainsi réalisée. Ensuite, les deux équipages 16, 17 s'écartent l'un de l'autre comme sur la figure 3 pour laisser passer entre eux la partie du tube 12 ainsi remplie de substance et laisser descendre le tube alors qu'il se trouve entraîné vers le bas. La soudure 41 réalisée sur le tube vient alors en contact avec le tapis roulant 40. Ensuite, les deux équipages 16, 17 se rapprochent à nouveau pour effectuer une soudure identique sur une partie du tube 12 plus en amont, et en amont de la fraction de substance 6 reçue dans le sac. Pendant ce soudage, le couteau 28, initialement en position rétractée, se déplace en position étendue pour trancher le tube 12 au voisinage et en aval de cette nouvelle soudure. Cette coupe sépare le sac 42 ainsi défini en aval du couteau, du reste du tube 12 s'étendant en amont du couteau. De plus, le sac 42 ne présentant en l'espèce aucune autre soudure ni même aucune autre fermeture que le bord inférieur soudé 41 reposant sur le tapis, cette coupe définit une embouchure supérieure ouverte 44 du sac, même si cette embouchure 44 est encore pincée comme on le verra. Ensuite, le sac 42 ainsi constitué est évacué suivant une direction horizontale perpendiculaire à l'axe 19, vers la droite comme le montre la figure 3.

On réalise en même temps la coupe d'un sac 42 et la soudure inférieure 41 sur la partie restante du tube, c'est-à-dire sur ce qui constituera le sac suivant en amont. Durant ces deux opérations réalisées simultanément alors que les deux équipages 16, 17 sont en position rapprochée, le tube 12 est pincé et tenu entre les barres de soudage 20 ainsi qu'entre les deux tronçons 36 des courroies en aval des cales 26. De plus, les cales 26 se trouvent à une faible distance du tube 12, de part et d'autre de celui-ci avec un léger jeu. Elles permettent d'éviter qu'une partie du tube se gondole ou se déforme durant ces opérations.

L'évacuation du sac 42, une fois celui-ci coupé, est effectuée au moyen du tapis 40 et des tronçons mobiles 36 des courroies avant que les équipages 16, 17 ne s'éloignent à nouveau l'un de l'autre.

Le dispositif comporte d'autres postes 50, 68, 80, 90, 94 s'étendant au-dessus du tapis roulant 40 les uns à la suite des autres vers l'aval. A cette fin, les courroies 30 présentent deux tronçons rectilignes 48 s'étendant parallèlement l'un à l'autre et en regard l'un de l'autre au-dessus du tapis et sous ces différents postes. Le sac 42 est ainsi supporté et tenu par le tapis et les tronçons rectilignes des courroies lors de son transport de l'un à l'autre de ces différents postes et lors des opérations à chacun des postes. A leur partie la plus en amont, les tronçons rectilignes 48 sont adaptés à saisir le sac 42 par un bord amont alors qu'il est encore tenu par les tronçons mobiles 36 à l'état rapproché. De la sorte, le début de l'évacuation du sac 42 est assuré par les tronçons mobiles 36 puis relayé par les tronçons rectilignes 48.

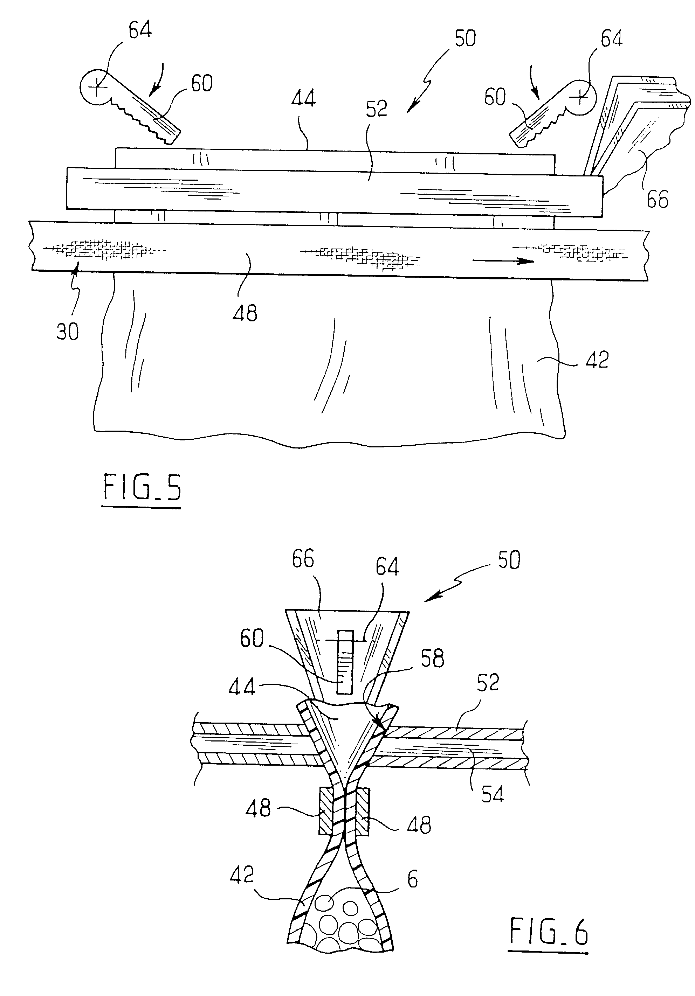

Après son évacuation en aval de la coupe, le sac 42 arrive au niveau d'un poste 50 de conformation de l'embouchure 44. En référence aux figures 5 et 6, ce poste 50 comporte deux barres d'aspiration 52 s'étendant parallèlement à une direction de déplacement du sac 42 et disposées en regard l'une de l'autre pour que les deux parties des parois du sac contiguës à l'embouchure 44 arrivent en regard de ces barres. Ces barres présentent des conduits internes 54 reliés à des moyens d'aspiration d'air et débouchant dans des orifices d'une face 58 des barres faisant face aux sacs. En partie amont des barres 52, ces deux faces s'étendent verticalement très près l'une de l'autre, puis progressivement s'inclinent vers l'extérieur par rapport à un plan vertical jusqu'à une partie aval des barres. Ainsi, lorsque le sac 42 arrive en regard de ces barres 52, les deux parois du sac au niveau de l'embouchure 44 sont progressivement écartées l'une de l'autre. Alternativement à ces barres ou en plus de celles-ci, on pourrait prévoir un dispositif de soufflage d'air adapté à souffler de l'air dans l'embouchure 44 du sac pour forcer les deux parois à s'écarter l'une de l'autre.

Ce poste 50 comporte également deux lames 60 s'étendant au-dessus du sac 42 à la même hauteur l'une et l'autre et à des positions différentes suivant la direction de déplacement. Les deux lames 60 sont mobiles autour de deux axes verticaux 64 respectifs. Elles sont mobiles en sens contraires l'une de l'autre. Les deux lames sont agencées pour fendre deux bords latéraux du sac 42 contigus à l'embouchure 44, opposés l'un à l'autre et formant la jonction entre les deux parois opposées du sac. Les deux lames sont disposées pour couper les bords de l'embouchure pendant l'écartement des parois par les barres d'aspiration 52.

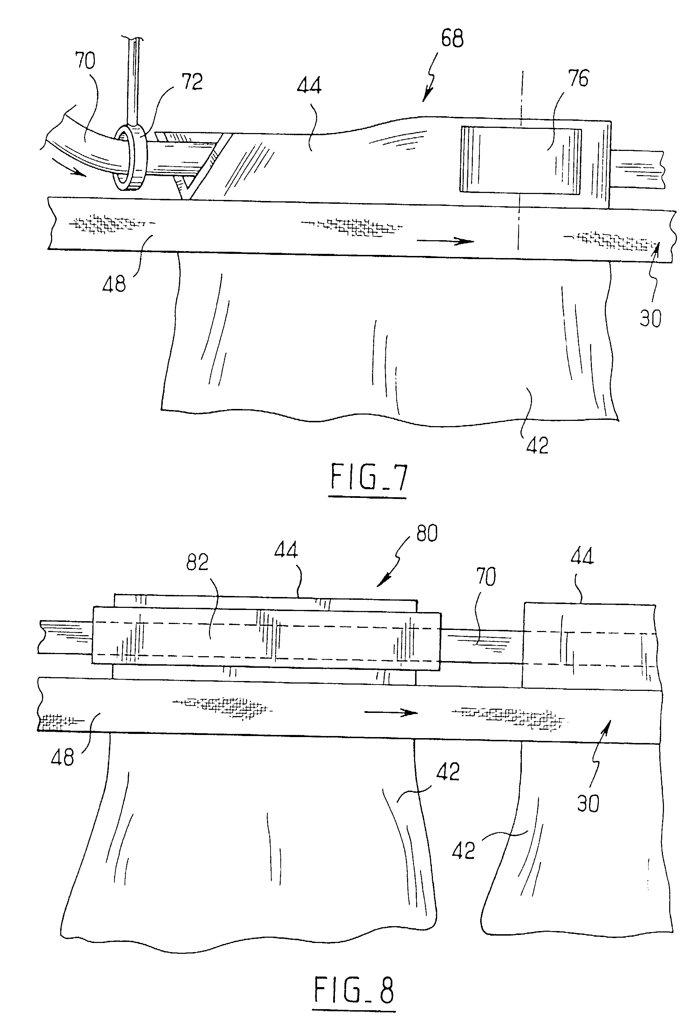

En aval des deux lames 60, un conformateur 66, par exemple en forme générale de "V", est disposé de sorte que, après la coupe, les deux parois du sac passent de part et d'autre de ce conformateur qui les maintient ainsi en position écartée. Bien que cela ne soit pas représenté sur la figure 7, le conformateur 66 se prolonge jusqu'au poste suivant de sorte que le sac 42 ne quitte le conformateur qu'après insertion d'un profilé dans l'embouchure 44 comme on va le voir.

Au poste suivant 68 du dispositif de conditionnement, un profilé de fermeture sans fin 70 est introduit entre les parois écartées de l'embouchure 44 des sacs 42, le profilé s'étendant parallèlement à la direction de déplacement des sacs, à une hauteur supérieure à celles des courroies 30. Le poste comporte un guide 72 à travers lequel passe le profilé 70 afin de prendre une position convenable. L'opération préalable de coupe des bords de l'embouchure 44 au moyen des lames 60 facilite l'insertion subséquente du profilé commun 70 dans l'embouchure. Après insertion du profilé sans fin, le sac 42 quitte le conformateur 66, et les parois du sac au niveau de l'embouchure 44 sont pressées l'une en direction de l'autre contre le profilé 70 au moyen de deux galets presseurs 76, dont un seul est visible sur la figure 7. Lorsque les sacs 42 quittent en continu ce poste 68 de pose du profilé commun, ils sont reliés les uns avec les autres par ce profilé commun ininterrompu comme le montre la figure 8.

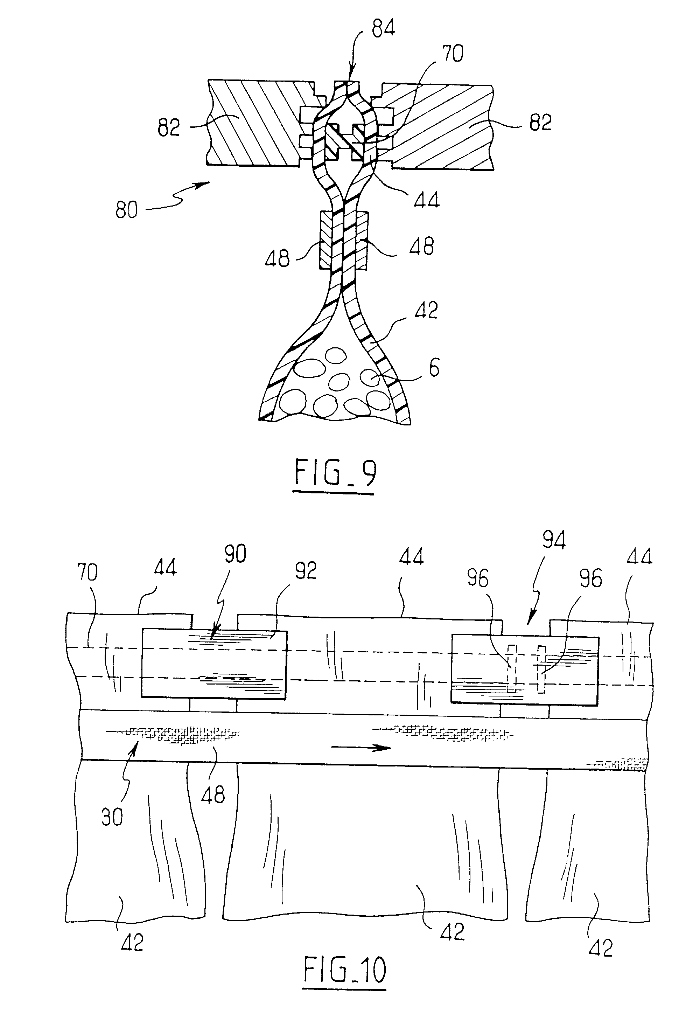

En référence aux figures 8 et 9, le poste suivant 80 est un poste de soudage du profilé 70 aux deux parois opposées du sac 42. Il comprend à cette fin deux barres de soudage 82 s'étendant de part et d'autre des sacs, en regard l'une de l'autre et adaptées à souder chaque face du profilé 70 aux parois respectives du sac 42 lorsque le sac passe entre les deux barres. En outre, les barres réalisent dans le présent exemple une soudure 84 des deux parois du sac directement entre elles au-dessus du profilé de fermeture 70. Cette soudure constitue par exemple une fermeture d'inviolabilité. Les sacs successifs 42 étant toujours reliés par le profilé commun 70, ce profilé assure maintenant la tenue des sacs les uns par rapport aux autres.

Chaque sac 42 passe ensuite en regard d'un poste 90 de post-soudure ou de soudure des bords. Ce poste comporte deux organes de soudage 92 adaptés à être éloignés et rapprochés des sacs 42 au passage de ceux-ci. On commande ces organes 92 de façon à souder les bords de l'embouchure 44 précédemment fendus par les lames 60. Ces bords sont ainsi soudés l'un à l'autre et soudés au profilé commun 70. Au cours de la même opération, on soude en même temps les bords amont d'un sac aval et les bords aval d'un sac amont au moyen des deux organes de soudage 92.

Le dispositif comporte ensuite un poste de coupe 94 comprenant une paire de lames 96 parallèles entre elles et perpendiculaires à la direction de défilement des sacs 42. Les deux lames 96 sont mobiles d'une seule pièce dans un plan horizontal pour être éloignées et rapprochées des sacs. Elles effectuent simultanément une coupe du profilé commun 70 juste en amont du sac aval et juste en aval du sac amont. Elles génèrent un tronçon de profilé 70 séparé des deux sacs 42 entre lesquels il a été coupé. Ce tronçon tombe et est évacué. En aval de ce poste, le conditionnement et la réalisation des sacs sont achevés. Les courroies 30 et le tapis 40 peuvent alors prendre fin et amorcer leur renvoi, ou bien par exemple, avant cela, acheminer les sacs 42 jusqu'à un lieu de stockage.

Bien entendu, on pourra apporter à l'invention de nombreuses modifications sans sortir du cadre de celle-ci.

On pourra réaliser sur le sac 42, entre l'emplacement de la coupe, et les substances 6, c'est-à-dire près de l'embouchure 44, une soudure ou un collage obturant cette embouchure en aval de l'emplacement prévu pour le profilé de fermeture 70.

La fixation des profilés 70 aux sacs 42 pourra être effectuée par soudure thermique, collage ou tout autre moyen équivalent.

Les profilés 70 utilisés peuvent faire l'objet de nombreuses variantes. Il peut s'agir de simples profilés à compléments de forme, par exemple mâle/femelle, ou encore de fermeture à glissière. Selon une variante, les profilés de fermeture peuvent présenter des dispositions dites d'inviolabilité, dans lesquelles les supports respectifs des profilés sont reliés par une bande repliée en "U", et susceptible de rupture lors de la première ouverture du sac, pour visualiser celle-ci, comme enseigné par exemple dans le document US-A-3 991 801.

On pourra remplacer la pose d'un profilé de fermeture commun ininterrompu 70 par la pose de profilés séparés individuels pour chaque sac 42.

Dans le présent exemple, les deux mêmes courroies 30 accompagnent le sac 42 depuis la coupe jusqu'à l'achèvement du conditionnement. Alternativement, on pourra employer plusieurs jeux de courroies successifs.

L'ensemble du dispositif pourra être commandé de façon adaptée par des systèmes d'avance électronique comportant moteur pas à pas, servomoteur, détecteur d'avance, capteur de vitesse, etc.

On pourra remplacer les courroies au niveau de la coupe par d'autres moyens tels qu'un dispositif de tenue à pinces qui, une fois la coupe effectuée, évacue le sac et le place sur des moyens de transport, par exemple à courroies, l'emmenant aux postes précités.

## Revendications

1. Procédé de réalisation de sacs (42), dans lequel :
- on prévoit un tube (12) ; et
- on coupe le tube pour séparer un sac (42) du reste du tube,
caractérisé en ce que :
- après l'étape de coupe, on pose sur le sac un profilé de fermeture (70) ; puis
- on ferme le sac.

2. Procédé selon la revendication 1, caractérisé en ce qu'on effectue la coupe pour former une embouchure ouverte (44) du sac (42) et on pose le profilé (70) sur l'embouchure (44).

3. Procédé selon la revendication 1 ou 2, caractérisé en ce que, préalablement à l'étape de coupe, on assemble deux parois du tube (12) pour former une liaison transversale (41) sur le tube.

4. Procédé selon l'une quelconque des revendications 1 à 3, caractérisé en ce que, après l'étape de coupe et préalablement à la pose du profilé (70), on déplace le sac (42) par rapport au tube (12) suivant une direction de déplacement localement non parallèle à une direction longitudinale locale (19) du tube.

5. Procédé selon l'une quelconque des revendications 1 à 4, caractérisé en ce que, préalablement à la pose du profilé (70), on conforme l'embouchure (44) en une forme prédéterminée.

6. Procédé selon la revendication 5, caractérisé en ce que, préalablement à l'étape de conformation, on écarte deux parois opposées de l'embouchure (44).

7. Procédé selon l'une quelconque des revendications 1 à 6, caractérisé en ce que, préalablement à la pose du profilé (70), on fend des bords latéraux du sac (42) contigus à l'embouchure (44).

8. Procédé selon l'une quelconque des revendications 1 à 7, caractérisé en ce qu'on pose le profilé (70) en fixant à au moins deux sacs (42) un profilé commun.

9. Procédé selon la revendication 8, caractérisé en ce que, après la fixation du profilé commun (70), on coupe le profilé pour séparer les sacs (42).

10. Procédé selon la revendication 9, caractérisé en ce que, préalablement à la coupe du profilé commun, on fixe des bords latéraux contigus à l'embouchure (42), l'un à l'autre et au profilé.

11. Procédé de conditionnement d'une substance, caractérisé en ce qu'il met en oeuvre le procédé selon l'une des revendications précédentes.

12. Procédé selon la revendication 11, caractérisé en ce qu'on introduit une substance (6) dans le sac (42) préalablement à la pose du profilé (70).

13. Procédé selon la revendication 11 ou 12, caractérisé en ce qu'on introduit une substance (6) dans le sac (42) préalablement à l'étape de coupe.

14. Dispositif pour la réalisation de sacs, comportant des moyens d'amenée d'un tube (12), et des moyens de coupe (28) du tube pour séparer un sac (42) du reste du tube, caractérisé en ce qu'il comporte des moyens (72) de pose d'un profilé de fermeture (70) sur le sac, disposés pour poser le profilé après que le sac a été séparé du tube, ce dispositif étant apte à fermer le sac après la pose du profilé.

15. Dispositif selon la revendication 14, caractérisé en ce qu'il est agencé de sorte que les moyens de coupe (28) forment une embouchure ouverte (44) sur le sac (42), et que les moyens de pose (72) posent le profilé (70) sur l'embouchure ouverte (44).

16. Dispositif selon la revendication 14 ou 15, caractérisé en ce qu'il comporte des moyens (20) pour fixer deux parois du tube (12) de façon à former une fermeture transversale (41) sur le tube, ces moyens s'étendant en amont des moyens de coupe (28) par référence à une direction (19) d'amenée du tube.

17. Dispositif selon l'une quelconque des revendications 14 à 16, caractérisé en ce qu'il comporte au moins une cale (26) pour le sac (42) lors d'une coupe par les moyens de coupe (28).

18. Dispositif selon la revendication 17, caractérisé en ce qu'il comporte au moins deux cales (26) adaptées à s'étendre de part et d'autre du sac (42) lors de la coupe par les moyens de coupe (28).

19. Dispositif selon l'une quelconque des revendications 14 à 18, caractérisé en ce qu'il comporte des moyens de transport (30, 40) pour déplacer le sac (42) par rapport au tube (12) jusqu'aux moyens de pose (72).

20. Dispositif selon la revendication 19, caractérisé en ce que les moyens de transport (30, 40) sont agencés pour déplacer le sac (42) suivant une direction localement non parallèle à une direction longitudinale (19) locale du tube (12).

21. Dispositif selon la revendication 19 ou 20, caractérisé en ce que les moyens de transport comprennent un tapis roulant (40).

22. Dispositif selon l'une quelconque des revendications 19 à 21, caractérisé en ce que les moyens de transport comprennent des courroies (30) adaptées à s'étendre de part et d'autre du sac (42).

23. Dispositif selon la revendication 22, caractérisé en ce que les courroies (30) sont adaptées à s'étendre en contact avec le sac (42) lors de la coupe par les moyens de coupe (28) et à être déplacées pour permettre une arrivée d'un autre sac (42) en regard des moyens de coupe.

24. Dispositif selon l'une quelconque des revendications 14 à 23, caractérisé en ce qu'il comporte des moyens (52) pour écarter deux parois opposées de l'embouchure (44).

25. Dispositif selon l'une quelconque des revendications 14 à 24, caractérisé en ce qu'il comporte un conformateur (66) pour l'embouchure ouverte (44).

26. Dispositif selon l'une quelconque des revendications 14 à 25, caractérisé en ce qu'il comporte des moyens (60) pour fendre des bords latéraux du sac contigus à l'embouchure (44) .

27. Dispositif selon l'une quelconque des revendications 14 à 26, caractérisé en ce que les moyens pour poser le profilé comprennent des moyens d'amenée (72) d'un profilé sans fin (70).

28. Dispositif selon la revendication 27, caractérisé en ce qu'il comporte des moyens de coupe (94) du profilé (70) s'étendant en aval des moyens de pose (72) du profilé par référence à une direction de déplacement du sac (42) par les moyens de transport (30, 40).

29. Dispositif selon l'une quelconque des revendications 14 à 28, caractérisé en ce qu'il comporte des moyens (90) pour fixer les bords latéraux du sac contigus à l'embouchure (44), l'un à l'autre et au profilé (70) .

30. Dispositif de conditionnement, caractérisé en ce qu'il comporte un dispositif selon l'une quelconque des revendications 14 à 29.

31. Dispositif selon la revendication 30, caractérisé en ce qu'il comporte des moyens (4) pour introduire une substance (6) dans le sac (42) préalablement à la pose par les moyens de pose (72).

32. Dispositif selon la revendication 30 ou 31, caractérisé en ce qu'il comporte des moyens (4) pour introduire une substance (6) dans le sac (42) préalablement à une coupe par les moyens de coupe (28).
